# EUROPEAN PATENT APPLICATION

(11) **EP 4 683 004 A1**
(43) Date of publication of application: **21.01.2026**
(21) Application number: 25183465.1
(22) Date of filing: 17.06.2025
(51) Int. Cl.: H01M 4/75, H01M 4/70, H01M 10/647

(54) **ELECTRODE PLATE, STACKED-TYPE CELL, AND POUCH BATTERY**

(30) Priority: 17.06.2024 CN 202410780877
(71) Applicant: Ningde Amperex Technology Limited, Ningde City, Fujian Province 352100 (CN)
(72) Inventor: ZHANG, Guowen, Ningde City, Fujian Province 352100 (CN); CHENG, Yifeng, Ningde City, Fujian Province 352100 (CN); MA, Wu, Ningde City, Fujian Province 352100 (CN)
(74) Representative: Icosa

(57) **Abstract**

An electrode plate body (1) includes a coated region (13) and a blank foil region (11) located at one end corner of the electrode plate body (1). A notched region (12) is provided at another end corner of the electrode plate body (1). A first boundary line (14) is between the blank foil region (11) and the coated region (13). An angle between a right-angled edge of the blank foil region in the short-side direction of the electrode plate body (1) and the first boundary line (14) ranges from 30° to 60°. A second boundary line (15) is between a notched region (12) and the coated region (13). An angle between the right-angled edge of the notched region (12) in the short-side direction of the electrode plate body (1) and the second boundary line (15) ranges from 30° to 60°.

## Description

### TECHNICAL FIELD

This application relates to the technical field of lithium-ion batteries, and in particular, to an electrode plate, a stacked-type cell, and a pouch battery.

### BACKGROUND

Compared with metal-shell batteries, pouch-type lithium-ion batteries with an aluminum laminated film as a shell material are increasingly widely used in the fields such as power batteries and portable devices by virtue of unique safety and flexibility in appearance design.

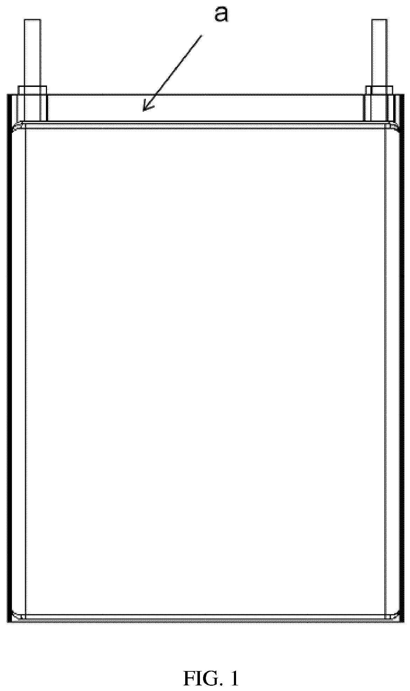

Stacked-type cells are the most common cell form of pouch batteries. As shown in FIG. 1, for a pouch battery, in a conventional outer package assembly, only the left and right sides of the aluminum laminated film undergoes a sealing operation and an edge folding operation. To ensure the hermetic sealing effect while maintaining the original structure, the length of the top seal edge is set to a relatively large value (as indicated by position a in FIG. 1). However, due to the presence of a sealing adhesive, the top of the battery is unable to undergo the edge folding operation, thereby resulting in a large loss in overall energy density (ED).

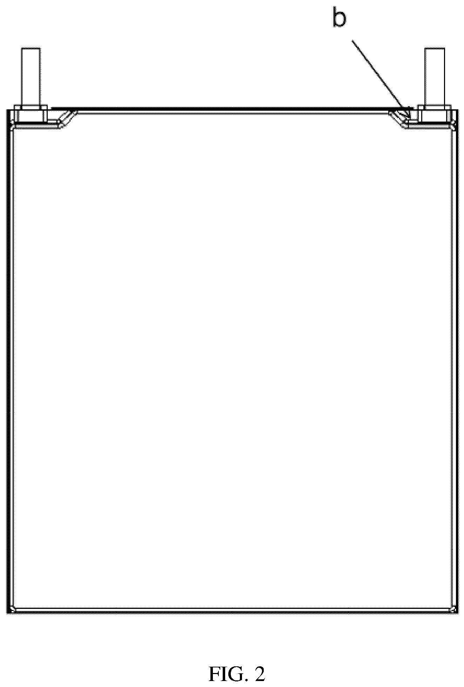

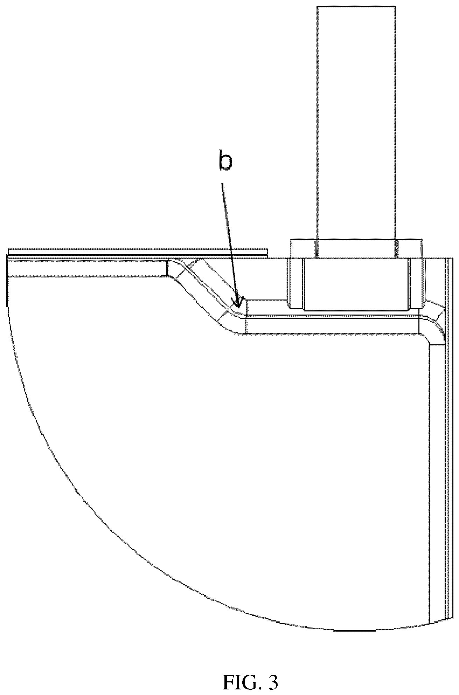

To implement the sealing and edge-folding operations for the top portion, as shown in FIG. 2, other pouch batteries usually adopt a special-shaped electrode plate structure, in which an electrode plate notch is configured as a complex shape (as indicated by position b in FIG. 2 and FIG. 3). In a process of forming a pocket by stamping a packaging film, the material is stretched and pulled repeatedly. In addition, an edge angle of the packaging film pocket is excessively small, and wrinkles are prone to be formed at the edge of the pocket and even damage the pocket, thereby reducing the effect of hermetic sealing.

Therefore, in the above two existing situations, the edge of the aluminum laminated film is unable to be folded at the top of the battery without adversely affecting the energy density and sealing effect.

### SUMMARY

In view of the above situation, an electrode plate, a stacked-type cell, and a pouch battery are provided to facilitate formation of a pocket from a packaging film for the pouch battery, increase the energy density benefits of the pouch battery, and enable the sealing and edge-folding operations for left and right sides and the top of the pouch battery.

According to one aspect, an electrode plate is provided. The electrode plate includes: a plurality of electrode plate bodies. Each electrode plate body includes a coated region and a blank foil region located at one end corner of the electrode plate body. The blank foil region forms a tab of the electrode plate body. A notched region is provided at another end corner of the plurality of electrode plate bodies. The notched region is configured to avoid blank foil regions of adjacent electrode plate bodies among the plurality of electrode plate bodies. The notched region is formed by chamfering the end corner of the electrode plate body. The blank foil region includes two right-angled edges in a long-side direction and a short-side direction of the electrode plate body. A boundary line between the blank foil region and the coated region is a first boundary line. An angle between the right-angled edge of the blank foil region in the short-side direction of the electrode plate body and the first boundary line ranges from 30° to 60°. The notched region includes two right-angled edges in the long-side direction and the short-side direction of the electrode plate body. A boundary line between the notched region and the coated region is a second boundary line. An angle between the right-angled edge of the notched region in the short-side direction of the electrode plate body and the second boundary line ranges from 30° to 60°.

Further, a preferred solution is that the angle between the right-angled edge of the blank foil region in the short-side direction of the electrode plate body and the first boundary line ranges from 45° to 60°; and the angle between the right-angled edge of the notched region in the long-side direction of the electrode plate body and the second boundary line ranges from 45° to 60°.

Further, a preferred solution is that the electrode plate body includes a plurality of end corners. The blank foil region is located on a first end corner of the electrode plate body. The notched region is located at a second end corner that is arranged symmetrically to the first end corner.

Further, a preferred solution is that the electrode plate body includes a first lateral edge and a second lateral edge parallel to each other, a third lateral edge perpendicular to the first lateral edge, and a fourth lateral edge perpendicular to the second lateral edge. The notched region is located at the second end corner formed by the first lateral edge and the third lateral edge. The blank foil region is located at the first end corner formed by the second lateral edge and the third lateral edge.

Further, a preferred solution is that both the blank foil region and the notched region are configured as right triangles.

According to another aspect, a stacked-type cell is further provided. The stacked-type cell includes a plurality of the electrode plates and a plurality of separators. The electrode plates are configured as negative electrode plates and positive electrode plates. The negative electrode plates and the positive electrode plates are alternately stacked in sequence. The separators are sandwiched between adjacent negative electrode plates and positive electrode plates.

Further, a preferred solution is that the blank foil region of the negative electrode plate is located at a first position, and the notched region of the positive electrode plate avoids the blank foil region; the blank foil region of the positive electrode plate is located at a second position, and the notched region of the negative electrode plate avoids the blank foil region; a plurality of the blank foil regions located at the same first position converge together to form an negative tab group of the stacked-type cell; and a plurality of the blank foil regions located at the same second position converge together to form a positive tab group of the stacked-type cell.

According to another aspect, a pouch battery is provided. The pouch battery includes the stacked-type cell, a packaging film, and at least two tab connection straps. The stacked-type cell is enclosed in the packaging film. One of the tab connection straps is electrically connected to the negative tab group of the stacked-type cell. One end of the tab connection strap is electrically connected to the negative tab group, and another end of the tab connection strap extends out of the packaging film to form a power transmission channel. One of the tab connection straps is electrically connected to the positive tab group of the stacked-type cell. One end of the tab connection strap is electrically connected to the positive tab group, and another end of the tab connection strap extends out of the packaging film to form a power transmission channel.

Further, a preferred solution is that the packaging film includes a recess, and a top seal edge and two side seal edges integrally formed with the recess. The stacked-type cell is enclosed in the recess. The top seal edge is connected to the stacked-type cell and bent at the top of the stacked-type cell. The two side seal edges are separately connected to the stacked-type cell and bent on corresponding lateral surfaces.

Further, a preferred solution is that the tab connection straps are configured as straight connection straps or special-shaped connection straps. The straight connection straps extend out from an end corner of the packaging film along a direction perpendicular to the bevel edge in the blank foil region. The special-shaped connection strap includes a first section and a second section. The first section extends out from the end corner of the packaging film along the direction perpendicular to the bevel edge in the blank foil region. The second section is integrally connected to a free end of the first section and extends along a long-side direction of the stacked-type cell.

The technical solutions of this application achieve at least the following beneficial effects:

In the electrode plate, stacked-type cell, and pouch battery described above, the shape of the electrode plate is designed such that the blank foil region is provided at one end corner of the electrode plate body and the notched region is provided at another end corner. Compared with the electrode plate of a conventional stacked-type cell, this application uses the blank foil region to replace the tab structure in the conventional electrode plate, so that the gap between the packaging film and the electrode plate can be reduced during sealing. In addition, the notched region is formed by chamfering one end corner of the electrode plate body. In this way, the angle between the right-angled edge of the notched region in the short-side direction of the electrode plate body and the second boundary line ranges from 30° to 60°, and the angle between the right-angled edge of the blank foil region in the short-side direction of the electrode plate body and the first boundary line also ranges from 30° to 60°. Compared with a special-shaped electrode plate structure, the structure of this application is performed by chamfering. Therefore, forming the notch by die-cutting the electrode plate is simpler, and the die-cut edges are flat and smooth. In addition, the edge angle of the packaging film is large, and wrinkles are not prone to be formed when a pocket is formed from the packaging film by stamping. The sealing effect is good. Moreover, compared with a conventional stacked-type cell, this application not only enables the sealing and edge folding on both sides, but also enables the sealing and edge folding at the top by virtue of the special design of the electrode plate structure. In addition, the top seal length is reduced, and the conventional top seal is eliminated, thereby increasing the energy density benefits of the pouch battery.

### BRIEF DESCRIPTION OF DRAWINGS

FIG. 1 is a schematic diagram showing that a top sealing plate of a conventional pouch cell is unable be folded at an edge;
FIG. 2 is a schematic diagram of a conventional pouch cell configured as a special-shaped electrode plate structure;
FIG. 3 is a schematic partial close-up view of the special-shaped electrode plate structure shown in FIG. 2;
FIG. 4 is a schematic structural diagram of an electrode plate according to an embodiment;
FIG. 5 is a schematic diagram showing that angles of a blank foil region and a notched region of a negative electrode plate are set to 45° according to an embodiment;
FIG. 6 is a schematic diagram showing that angles of a blank foil region and a notched region of a positive electrode plate are set to 45° according to an embodiment;
FIG. 7 is a schematic diagram showing that angles of a blank foil region and a notched region of a negative electrode plate are set to 30° according to an embodiment;
FIG. 8 is a schematic diagram showing that angles of a blank foil region and a notched region of a positive electrode plate are set to 30° according to an embodiment;
FIG. 9 is a front view of a stacked-type cell according to an embodiment;
FIG. 10 is a schematic structural diagram of a negative tab group and a positive tab group formed by convergence of blank foil regions of a stacked-type cell according to an embodiment;
FIG. 11 is a first front view of a pouch battery according to an embodiment;
FIG. 12 is a schematic partial view of connection between a special-shaped connection strap and a negative tab group according to an embodiment;
FIG. 13 is a second front view of a pouch battery according to an embodiment;
FIG. 14 is a schematic partial view of connection between a straight connection strap and a negative tab group according to an embodiment;
FIG. 15 is a three-dimensional schematic diagram of a pouch battery according to an embodiment; and
FIG. 16 is a close-up view of a position at which a pocket is formed by stamping a packaging film according to an embodiment.

List of reference numerals: 1. electrode plate body; 11. blank foil region; 12. notched region; 13. coated region; 14. first boundary line; 15. second boundary line; 16. first lateral edge; 17. second lateral edge; 18. third lateral edge; 19. fourth lateral edge; 2. stacked-type cell; 21. negative tab group; 22. positive tab group; 3. packaging film; 31. pocket; 32. top seal edge; 33. side seal edge; 4. tab connection strap.

### DETAILED DESCRIPTION

To make the objectives, technical solutions, and advantages of this application clearer, the following describes this application in further detail with reference to drawings and embodiments. Understandably, the specific embodiments described herein are merely intended to explain this application, but are not intended to limit this application.

It is hereby noted that a drawing provided in an embodiment merely illustrates a basic concept of this application in a schematic manner. Therefore, the drawing merely shows components related to this application, and is not plotted based on the number, shape, and dimensions of the components in actual implementation. In actual implementation, the form, quantity, and scale of each component may be changed arbitrarily, and the component layout may be more complicated.

The structures, scales, dimensions, and the like illustrated in the drawings of this specification are merely intended to facilitate understanding and reading by a person skilled in the art with reference to the content disclosed in the specification, but are not conditions for restricting the implementation of this application, and therefore, are of no substantive technical significance. Any structural modification, change in the proportional relationship, or adjustment of size, insofar as they do not affect the effects and objectives that can be achieved by this application, still fall within the scope of the technical content disclosed in this application.

A direction or a positional relationship indicated by the terms such as "up", "down", "left", "right", "middle", "longitudinal", "transverse", "horizontal", "in", "out", "radial", and "circumferential" used herein is a direction or positional relationship based on the illustration in the drawings, and is merely intended to simplify description, but not intended to indicate or imply that the apparatus or component in question is necessarily oriented in the specified direction or constructed or operated in the specified direction. Therefore, such terms are not to be understood as a limitation on this application. In addition, the terms such as "first" and "second" are merely used for descriptive purposes, but not intended to indicate or imply relative importance.

An embodiment of this application provides an electrode plate, a stacked-type cell, and a pouch battery. By designing the shape of the electrode plate, this application facilitates formation of a pocket from a packaging film for the pouch battery, increases the energy density (ED) benefits of the pouch battery, and enables the sealing and edge-folding operations for left and right sides and the top of the pouch battery.

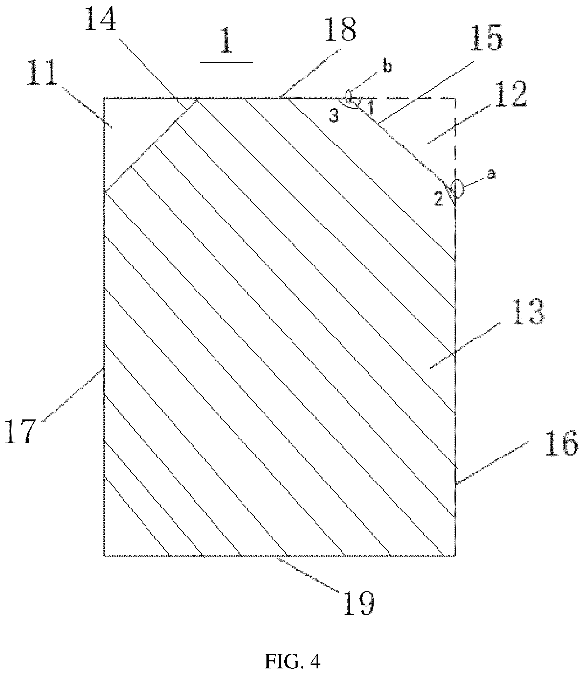

The following describes in detail an electrode plate provided in this embodiment. As shown in FIG. 4, the electrode plate includes a plurality of electrode plate bodies 1. Each electrode plate body 1 includes a coated region 13 and a blank foil region 11 located at one end corner of the electrode plate body 1. The blank foil region 11 forms a tab of the electrode plate body 1. A notched region 12 is provided at another end corner of the plurality of electrode plate bodies 1. The notched region 12 is configured to avoid the blank foil regions 11 of adjacent electrode plate bodies 1 in the plurality of electrode plate bodies 1, so as to facilitate contact between two adjacent blank foil regions 11 of the same polarity. The notched region 12 is formed by chamfering the end corner of the electrode plate body 1. The blank foil region 11 includes two right-angled edges in the long-side direction and the short-side direction of the electrode plate body 1. A boundary line between the blank foil region 11 and the coated region 13 is a first boundary line 14. An angle between the right-angled edge of the blank foil region 11 in the short-side direction of the electrode plate body 1 and the first boundary line 14 ranges from 30° to 60°. The notched region 12 includes two right-angled edges in the long-side direction and the short-side direction of the electrode plate body 1. A boundary line between the notched region 12 and the coated region 13 is a second boundary line 15. An angle between the right-angled edge of the notched region 12 in the short-side direction of the electrode plate body 1 and the second boundary line 15 ranges from 30° to 60°. In this embodiment, the end corner of the electrode plate body 1 is an angled corner formed by the electrode plate body 1 at the end portion position of the electrode plate body. The chamfering in this embodiment is a method of diagonally cutting the end corner at an inclination at the end corner position of the electrode plate body 1.

In this embodiment, the blank foil region 11 at one end corner of the electrode plate body 1 is used as a replacement, thereby changing the practice of extending tabs out of the head in a conventional electrode plate, and reducing the gap between the packaging film and the electrode plate during sealing. In addition, the notched region 12 is formed by chamfering one end corner of the electrode plate body 1. Compared with a conventional special-shaped electrode plate structure (there is a conventional structure in which a rectangle is cut out at the end corner, the end corner of the rectangular structure is vertical, the edge angle of the pocket is excessively small, wrinkles are prone to be formed at the edge of the pocket or even damage the pocket, and furling is inconvenient), chamfering is performed in this embodiment, the die-cutting of the electrode plate body 1 is simpler, and the edges are smooth. In addition, the angle between the right-angled edge of the notched region 12 in the short-side direction of the electrode plate body 1 and the second boundary line 15 is set to a range of 30° to 60°, and the angle between the right-angled edge of the blank foil region 11 in the short-side direction of the electrode plate body 1 and the first boundary line 14 is also set to a range of 30° to 60°. In this way, when the packaging film is stamped to form a pocket in the subsequent packaging process, the edge angle of the pocket is large, and wrinkles are not prone to form, thereby contributing to a good sealing effect in subsequent steps. The stacked-type cell formed of the electrode plate of this structural design enables the sealing and edge-folding operations on the left and right sides and at the top.

Still referring to FIG. 4, in this embodiment, it is worth noting that the electrode plate body 1 is configured as a sheet structure and includes a plurality of end corners. The blank foil region 11 and the notched region 12 are respectively provided at different end corner positions. Specifically, the blank foil region 11 is located at a first end corner on the electrode plate body 1, the notched region 12 is located at a second end corner, and the first end corner and the second end corner are symmetrical to each other with respect to the center line of the electrode plate body 1. The following describes in detail an example in which the electrode plate body 1 is configured as a rectangular structure in this embodiment. The rectangularly structured electrode plate body 1 includes a first lateral edge 16 and a second lateral edge 17 parallel to each other, a third lateral edge 18 perpendicular to the first lateral edge 16, and a fourth lateral edge 19 perpendicular to the second lateral edge 17. The first lateral edge 16, the second lateral edge 17, the third lateral edge 18, and the fourth lateral edge 19 wrap around to form a closed rectangular structure. The rectangularly structured electrode plate body 1 includes four end corners. A first end corner is formed by a joint between the second lateral edge 17 and the third lateral edge 18. The second end corner is formed by a joint between the first lateral edge 16 and the third lateral edge 18. Understandably, the first end corner and the second end corner are arranged symmetrically to each other on the sheet surface of the electrode plate body 1 with respect to the center line perpendicular to the third lateral edge 18 and the fourth lateral edge 19. Therefore, in this embodiment, the blank foil region 11 is disposed on the first end corner formed by the second lateral edge 17 and the third lateral edge 18. The notched region 12 is provided on the second end corner formed by the first lateral edge 16 and the third lateral edge 18. In other words, the notched region 12 and the blank foil region 11 are located at two end corner positions at the same end of the electrode plate body 1.

Still referring to FIG. 4, in an example, the blank foil region 11 and the notched region 12 are of the same size and same shape, and the blank foil region 11 and the notched region 12 in this embodiment are arranged symmetrically to each other on the sheet surface of the electrode plate body 1 with respect to the center line perpendicular to the third lateral edge 18 and the fourth lateral edge 19. Preferably, in this embodiment, the shapes of the blank foil region 11 and the notched region 12 are both configured as right triangles. In this embodiment, a right triangle is diagonally cut away at the second end corner formed by the first lateral edge 16 and the third lateral edge 18 of the electrode plate body 1, so as to form the notched region 12; and a blank foil region 11 of the same shape and same size as the cut-away right triangle is provided at the first end corner formed by the second lateral edge 17 and the third lateral edge 18 of the electrode plate body 1.

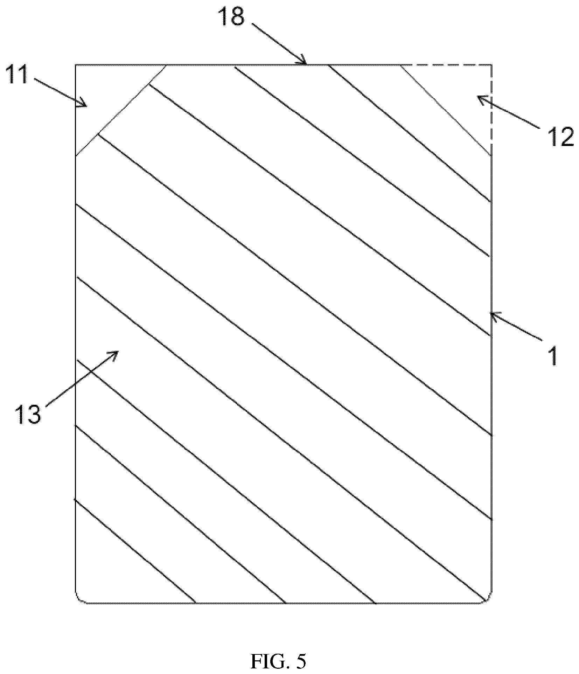

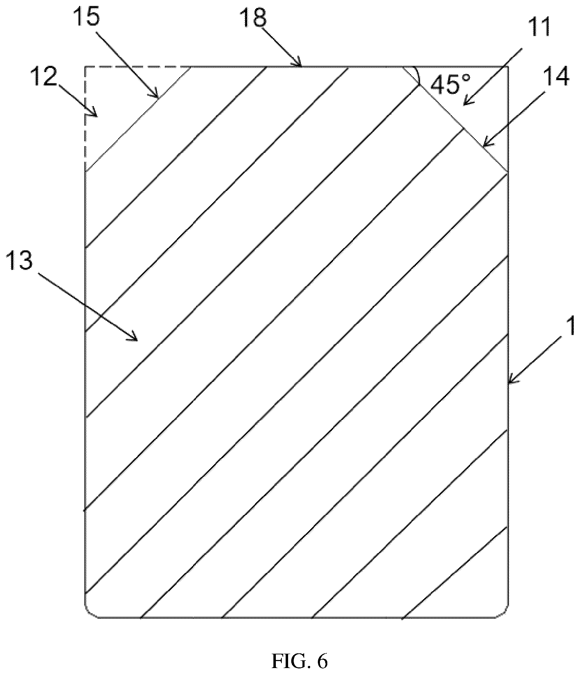

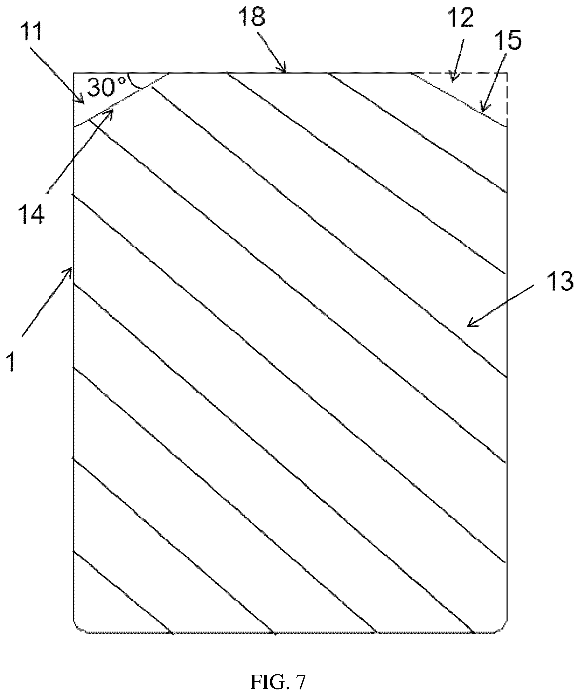

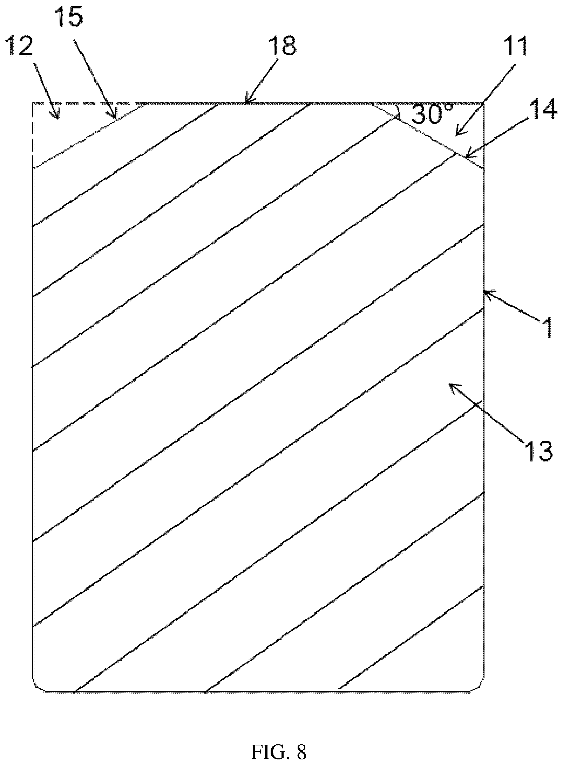

Referring to FIG. 4 to FIG. 8, in this embodiment, a right triangle is diagonally cut away at the second end corner of the electrode plate body 1. Depending on different needs, the cut-away right triangle may be of different shapes such as an isosceles right triangle. In addition, on the basis of a constant area of the right triangle, the angle opposite to the right angle side, located in the long-side direction of the electrode plate body 1, of the right triangle, that is, an acute angle between the hypotenuse of the right triangle and the third lateral edge 18, is defined as a first angle ∠1, an obtuse angle between the hypotenuse of the right triangle and the first lateral edge 16 is defined as a second angle ∠2, and an obtuse angle between the hypotenuse of the right triangle and the third lateral edge 18 is defined as a third angle ∠3. In this embodiment, the sizes of the second angle ∠2 and the third angle ∠3 are controlled by adjusting the size of the first angle ∠1.

It is hereby noted that the size of the first angle ∠1 affects the size of the area available for a welding region. If the area available for the welding region is excessively large, the corresponding first angle ∠1 is essentially excessively large; and, if the area available for the welding region is excessively small, the corresponding first angle ∠1 is essentially excessively small. In addition, the size of the first angle ∠1 affects a proportion of damaged pockets. For example, when the first angle ∠1 is set to an excessively small value, the area available for the welding region is relatively small. Accordingly, based on the principle that angles forming a straight angle add up to 180°, the second angle ∠2 will be excessively small. In this case, the corner at position a is sharper and more prone to be damaged. For example, when the first angle ∠1 is set to an excessively large value, the area available for the welding region is excessively large. Accordingly, based on the supplementary angle theorem, the third angle ∠3 will be excessively small. In this case, the corner at position b is sharper and more prone to be damaged.

In this embodiment, if the first angle ∠1 is excessively large or small, the space available for subsequent welding is insufficient, and the pocket is prone to be damaged when being formed by stamping subsequently. In addition, if the area of the right triangle is excessively large, the coated region of the electrode plate will become smaller, thereby resulting in energy density loss. Therefore, it is necessary to reasonably set the size of the first angle ∠1 between the hypotenuse of the right triangle and the third lateral edge 18 in the blank foil region 11 and the notched region 12. In this embodiment, the first angle ∠1 is set to a value of 30° to 60°. In other words, the first angle ∠1 between the hypotenuse of the blank foil region 11 (that is, the first boundary line 14) and the third lateral edge 18 is set to a value of 30° to 60°, and the first angle ∠1 between the hypotenuse of the notched region 12 (that is, the second boundary line 15) and the third lateral edge 18 is set to a value of 30° to 60°. More preferably, the first angle ∠1 is uniformly set to a value of 45° to 60°.

In order to better illustrate the effect of setting the first angle ∠1 to a value of 30° to 60° and a value of 45° to 60° in this embodiment, several cases where the first angle ∠1 is set to 20°, 30°, 35°, 40°, 45°, 50°, 55°, 60°, and 70° are set out in Table 1 below in contrast:

**Table 1**

| | First angle | Energy density | Area available for welding region | Pocket damage proportion |
|---|---|---|---|---|
| Embodiment 1 | 30 | 102.13% (+2.13%) | 68.71% (-31.29%) | 0.2% |
| Embodiment 2 | 35 | 101.51% (+1.51%) | 79.50% (-20.50%) | 0.2% |
| Embodiment 3 | 40 | 100.81% (+0.81%) | 89.97% (-10.03%) | 0.1% |
| Embodiment 4 | 45 | 100% (base) | 100% (base) | 0% |
| Embodiment 5 | 50 | 99.03% (-0.97%) | 109.64% (+0.64%) | 0% |
| Embodiment 6 | 55 | 97.84% (-2.16%) | 118.65% (+18.65%) | 0% |
| Embodiment 7 | 60 | 96.31% (-3.69%) | 127.08% (+27.08%) | 0% |
| Comparative Embodiment 1 | 20 | 103.21% (+3.21%) | 46.36% (-53.64%) | 0.5% |
| Comparative Embodiment 2 | 70 | 91.19% (-8.81%) | 141.70% (+41.70%) | 0.5% |

According to the above Table 1, benchmarked against the first angle ∠1 being set to 45° in Embodiment 4, when the first angle ∠1 is set to 20° in Comparative Embodiment 1, the energy density (ED) is 103.21%, which is 3.21% higher than that in Embodiment 4, but the area available for the welding region is 46.36%, which is 53.64% lower than that in Embodiment 2; and the pocket damage proportion is as high as 0.5%. When the first angle ∠1 is set to 70° in Comparative Embodiment 2, the energy density (ED) is 91.19%, which is 8.81% lower than that in Embodiment 2, but the area available for the welding region is 141.70%, which is 41.70% higher than that in Embodiment 2, and the pocket damage proportion is also as high as 0.5%. As can be seen, if the first angle ∠1 is set to an excessively large value, although the area available for the welding region is increased, the third angle ∠3 will be excessively small, and the corner corresponding to the third angle ∠3 is sharper and more prone to be damaged, thereby resulting in a medium pocket damage proportion. Similarly, if the first angle ∠1 is set to an excessively small value, the second angle ∠2 will be excessively small, and the corner corresponding to the second angle ∠2 is sharper and more prone to be damaged, thereby resulting in a medium pocket damage proportion, and reducing the area available for the welding region. Therefore, setting the first angle ∠1 to an excessively large or excessively small value may result in insufficient space available for subsequent welding or a high pocket damage proportion.

When the first angle ∠1 is set to 30° in Embodiment 1, the energy density (ED) is 102.13%, which is 2.13% higher than that in Embodiment 4, but the area available for the welding region is 68.71%, which is 31.29% lower than that in Embodiment 4, and the pocket damage proportion is as low as 0.2%.

When the first angle ∠1 is set to 35° in Embodiment 2, the energy density (ED) is 101.51%, which is 1.51% higher than that in Embodiment 4, but the area available for the welding region is 79.50%, which is 20.50% lower than that in Embodiment 4, and the pocket damage proportion is as low as 0.2%.

When the first angle ∠1 is set to 40° in Embodiment 3, the energy density (ED) is 100.81%, which is 0.81% higher than that in Embodiment 4, but the area available for the welding region is 89.97%, which is 10.03% lower than that in Embodiment 4, and the pocket damage proportion is as low as 0.1%.

When the first angle ∠1 is set to 50° in Embodiment 5, the energy density (ED) is 99.03%, which is 0.97% lower than that in Embodiment 4, but the area available for the welding region is 109.64%, which is 0.64% higher than that in Embodiment 4, and the pocket damage proportion is 0%.

When the first angle ∠1 is set to 55° in Embodiment 6, the energy density (ED) is 97.84%, which is 2.16% lower than that in Embodiment 4, but the area available for the welding region is 118.65%, which is 18.65% higher than that in Embodiment 4, and the pocket damage proportion is 0%.

When the first angle ∠1 is set to 60° in Embodiment 7, the energy density (ED) is 96.31%, which is 3.69% lower than that in Embodiment 4, but the area available for the welding region is 127.08%, which is 27.08% higher than that in Embodiment 4, and the pocket damage proportion is 0%.

With the three factors-energy density (ED), the area available for the welding region, and the pocket damage proportion being considered comprehensively, in this embodiment, when the first angle ∠1 is set to a value of 30° to 60°, although the area available for the welding region may be reduced, the pocket damage ratio is low. More preferably, the first angle ∠1 is set to 45° to 60°. In this case, the area available for the welding region is increased and the pocket damage ratio is 0%.

According to an embodiment, a stacked-type cell is further provided. The stacked-type cell includes a plurality of the electrode plates and a plurality of separators. The electrode plates are configured as negative electrode plates and positive electrode plates. The negative electrode plates and the positive electrode plates are alternately stacked in sequence. The separators are sandwiched between adjacent negative electrode plates and positive electrode plates.

In an implementation, a plurality of negative electrode plates, positive electrode plates, and separators may be stacked in the following manner: a negative electrode plate, a separator, a positive electrode plate, and a separator are stacked in this order cyclically; or, a positive electrode plate, a separator, a negative electrode plate, and a separator are stacked in this order cyclically; or, the upper and lower surfaces of a negative electrode plate are joined to separators respectively by hot-pressing, and then joined to positive electrode plates and then joined to negative electrode plates in sequence, and the plates are stacked in this order cyclically; or, the upper and lower surfaces of a positive electrode plate are joined to separators respectively by hot-pressing, and then negative electrode plates and positive electrode plates are stacked on the separators in sequence. The plates are stacked in this order cyclically. How to implement the stacking of the negative electrode plate, the positive electrode plate, and the separator is not particularly limited herein.

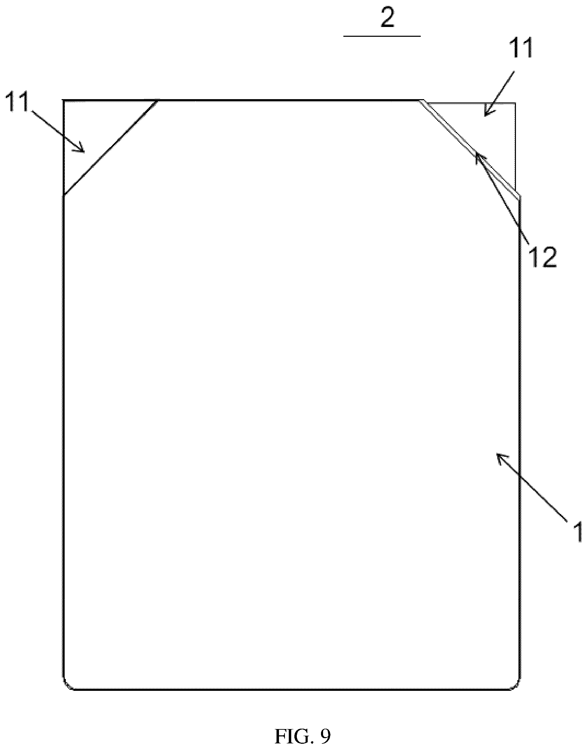

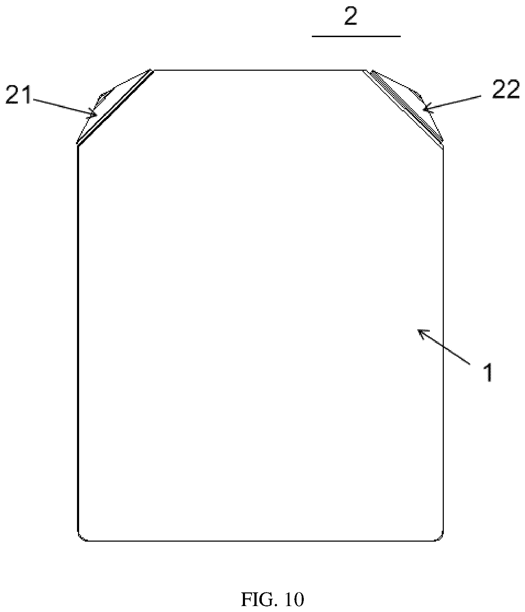

Referring to FIG. 9 and FIG. 10, in this embodiment, it is hereby noted that the notched region 12 and the blank foil region 11 on the negative electrode plate and the positive electrode plate are arranged opposite to each other. In other words, the blank foil region 11 of the negative electrode plate is located at a first position, and the notched region 12 of the positive electrode plate just avoids the blank foil region 11 of the negative electrode plate; and the blank foil region 11 of the positive electrode plate is located at a second position, and the notched region 12 of the negative electrode plate just avoids the blank foil region 11 of the positive electrode plate. In this way, during stacking, a plurality of blank foil regions 11 located at the same first position converge together by welding or other joining means to form a negative tab group 21 of a stacked-type battery 2. In the negative tab group 21, any two adjacent blank foil regions 11 at least partially contact each other to form an electrical connection. A plurality of blank foil regions 11 located at the same second position converge by welding or other joining means to form a positive tab group 22 of a stacked-type battery 2. In the positive tab group 22, any two adjacent blank foil regions 11 at least partially contact each other to form an electrical connection. A contact surface between the blank foil regions 11 of adjacent negative tab groups 21 and a contact surface between the blank foil regions 11 of adjacent positive tab groups 22 implement fixed connection by welding separately. Preferably, the fixed connection is implemented by ultrasonic welding, thereby ensuring the hermeticity and connection stability between the resultant negative tab groups 21, and between the resultant positive tab groups 22.

Further, it is hereby noted that the shapes of both the negative tab group 21 and the positive tab group 22 formed above are right triangles.

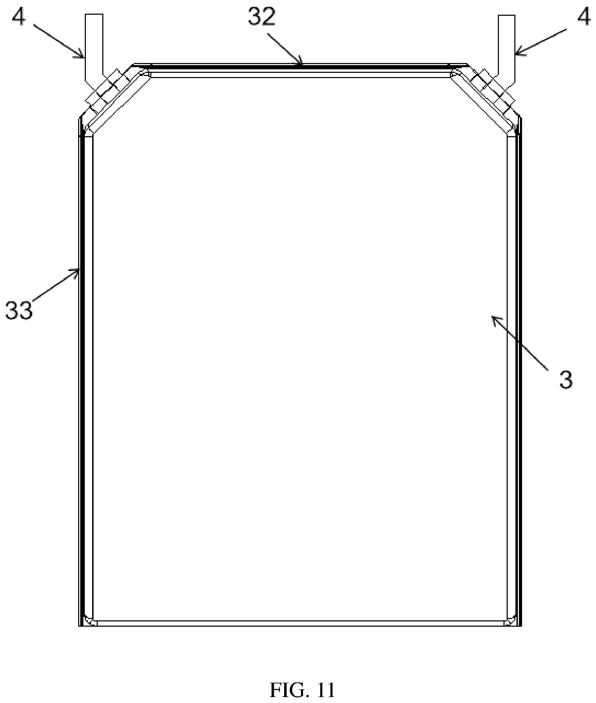

Referring to FIG. 11 to FIG. 16, in an embodiment, a pouch battery is further provided. The pouch battery includes the above-mentioned stacked-type cell 2, a packaging film 3, and at least two tab connection straps 4. The stacked-type cell 2 is enclosed in the packaging film 3. One of the tab connection straps 4 is electrically connected to the negative tab group 21 of the stacked-type cell 2. In other words, one end of the tab connection strap 4 is electrically connected to the negative tab group 21, and another end of the tab connection strap extends out of the packaging film 3 to form a power transmission channel. One of the tab connection straps 4 is electrically connected to the positive tab group 22 of the stacked-type cell 2. In other words, one end of the tab connection strap 4 is electrically connected to the positive tab group 22, and another end of the tab connection strap extends out of the packaging film 3 to form a power transmission channel.

The stacked-type cell 2 is sealed in the packaging film 3. One end of the tab connection strap 4 is located inside the packaging film 3, and is electrically connected to the negative tab group 21 or the positive tab group 22. The tab connection strap 4 is electrically connected to the negative tab group 21 or the positive tab group 22 by laser welding or ultrasonic welding. The position of the electrical connection between the two components may be the center of the negative tab group 21 or the positive tab group 22, or the surfaces of the negative tab group 21 or the positive tab group 22 on both sides, on which no specific limitation is imposed herein.

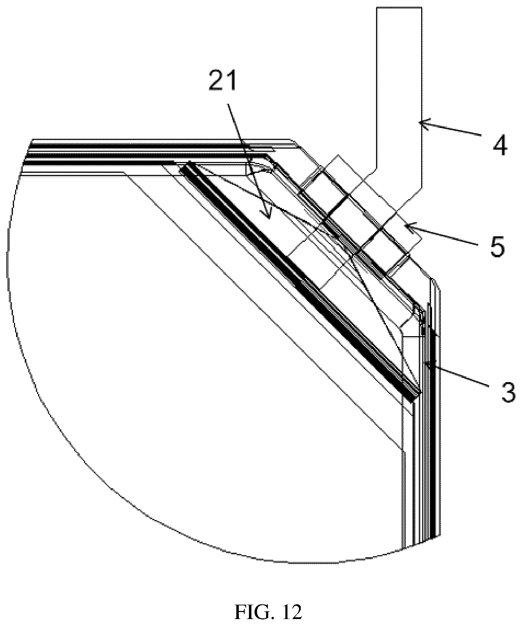

In an example, due to the special design of the electrode plate, the tab connection strap 4 may be a conventional straight connection strap or a special-shaped connection strap. The connection strap is described here by using an example in which the tab connection strap 4 is connected to a negative tab group 21. Referring to FIG. 11 and FIG. 12, when the tab connection strap 4 is configured as a special-shaped connection strap, the special-shaped connection strap includes a first section and a second section. A fixed end of the first section extends out from an end corner of the packaging film 3 along a direction perpendicular to the bevel edge of the blank foil region 11 (that is, the negative tab group 21). The second section is integrally connected to the free end of the first section and extends along the long-side direction of the stacked-type cell 2. The first section of the special-shaped connection strap extends out from the end corner of the packaging film 3 along the direction perpendicular to the bevel edge of the blank foil region 11, and therefore, an overlap region between the end portion of the first section of the special-shaped connection strap and the blank foil region 11, which constitutes a contact and welding area, is relatively large, thereby implementing high stability of welding. In addition, the second section of the special-shaped connection strap extends along the long-side direction of the stacked-type cell 2, so as to provide the same side available for electrical connection to an external device as the long-side direction of the stacked-type cell 2. In this way, the overall width of the resultant finished battery is prevented from being excessively large, thereby saving space. However, the special-shaped connection strap is not a standard part and involves high manufacturing cost.

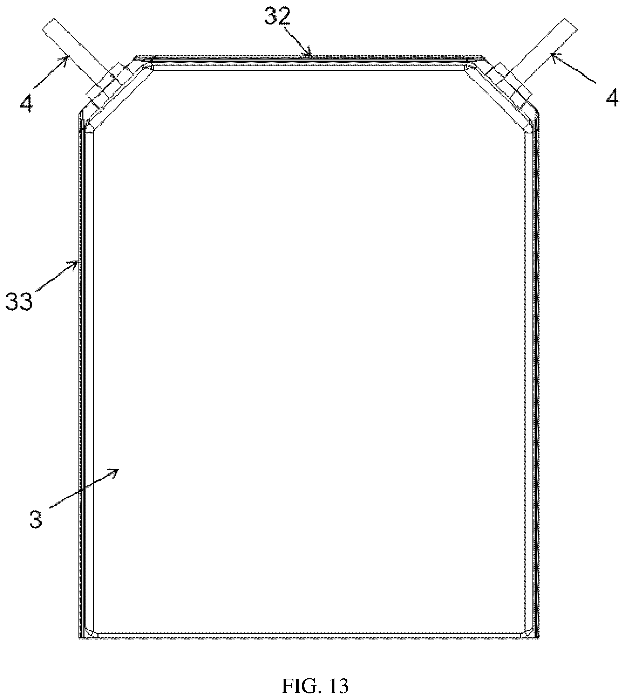

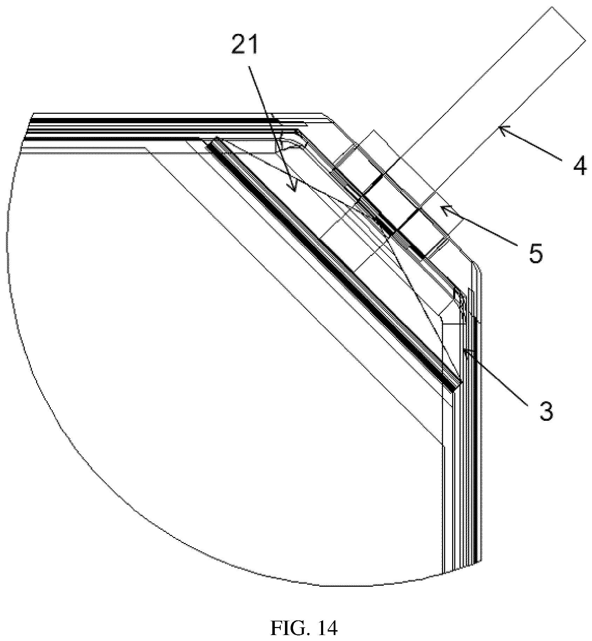

Referring to FIG. 13 and FIG. 14, when the tab connection strap 4 is disposed as a conventional straight connection strap, a fixed end of the straight connection strap extends out from the end corner of the packaging film 3 along a direction perpendicular to the bevel edge in the blank foil region 11 (that is, the negative tab group 21). When a straight connection strap is put in use, a fixed end of the straight connection strap extends out from the end corner of the packaging film 3 along the direction perpendicular to the bevel edge in the blank foil region 11 (that is, the negative tab group 21). In this way, it is ensured that the overlap region between the straight connection strap and the blank foil region 11, which constitutes the contact and welding area, is relatively large, and the welding stability is high. The straight connection strap is a standard part, and is easy to manufacture and cost-effective, but the width is larger during subsequent packaging, thereby being adverse to space efficiency. The specific form of the tab connection strap 4 is not particularly limited herein, and may be selected according to actual conditions.

In this embodiment, the end corner of the packaging film 3 is disposed at a position exactly opposite to the end corner of the stacked-type cell 2 when the stacked-type cell 2 is housed. The vertical state described in this embodiment is not strict verticality, but allows for a 5° error.

In an implementation, in order to enhance hermeticity, a sealing adhesive 5 is disposed between the packaging film 3 and the surface of the negative tab group 21 and between the packaging film 3 and the surface of the positive tab group 22 to implement fixed connection. The sealing adhesive 5 can improve the sealing reliability of a top seal formed by the connection between the negative tab group 21 and the packaging film 3 as well as the top seal formed by the connection between the positive tab group 22 and the packaging film 3, thereby ensuring that an electrolyte solution in the stacked-type cell 2 is sealed inside the pouch battery, and in turn, improving the safety of the pouch battery in use. Preferably, the sealing adhesive 5 is a solid-state sealing adhesive, and meets the requirements on the operating environment of pouch batteries. The solid-state sealing adhesive is characterized by not flowing around, thereby making it convenient to control the mounting position of the sealing adhesive, and in turn, ensuring the hermeticity of the connection between the stacked-type cell 2 and the packaging film 3.

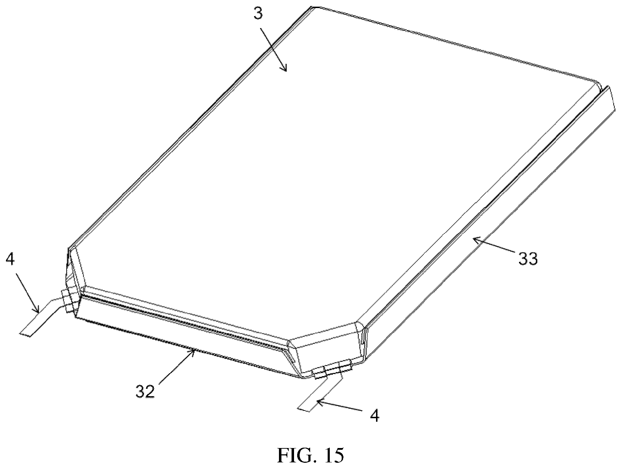

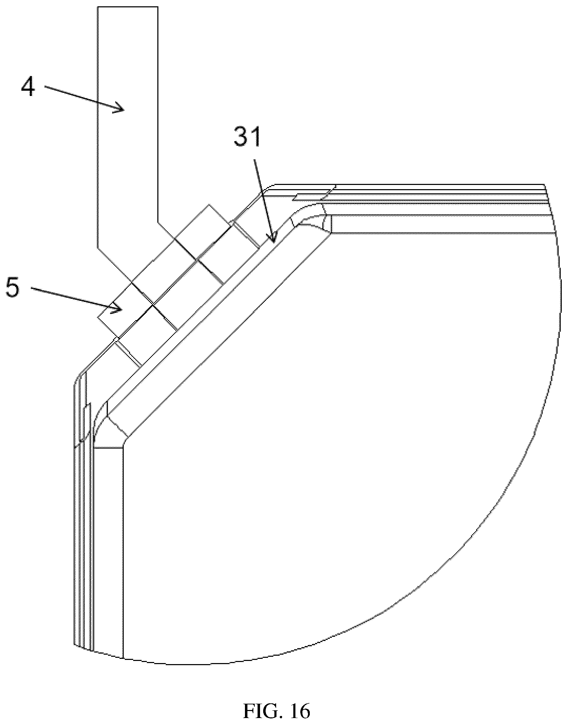

Referring to FIG. 15 and FIG. 16, in this embodiment, it is hereby noted that the packaging film 3 is pre-stamped to form a pocket 31 as well as a top seal edge 32 and two side seal edges 33 integrally formed with the pocket 31. The pocket 31 is formed by stamping according to the shape of the stacked-type cell 2. The end portion of the pocket at the edge position can be adapted to a die-cut notch of the electrode plate body 1. The stacked-type cell 2 is placed in the stamped pocket 31. A die-cut notch of the electrode plate body 1 of the stacked-type cell 2 is simpler to form, and the die-cut edge is flat and smooth. Therefore, when the packaging film 3 is stamped to form a pocket during the packaging, the edge angle of the pocket is large, wrinkles are not prone to be formed at the edge of the pocket, and the packaging effect is good. The top seal edge 32 of the packaging film 3 is connected to the stacked-type cell 2 and bent on the top end surface. The two side seal edges 33 are connected to the stacked-type cell 2 separately, and bent on the corresponding lateral surfaces.

In an embodiment, a specific operation process of packaging the stacked-type cell is described, including the following main steps:

### Step S201: Form a negative electrode plate and a positive electrode plate;

A right triangle is cut away at a second end corner of the negative electrode plate by a die-cutting process to form a notched region 12. A first end corner of the negative electrode plate is configured as an blank foil region 11 of the same shape and same size as the cut-away right triangle. The blank foil region 11 is configured to replace the tab. The configuration of the positive electrode plate is opposite to that of the negative electrode plate, the details of which are omitted here.

### Step S202: Stack the plates to form a stacked-type cell:

Along the stacking direction of the negative electrode plates, the contact surfaces between the blank foil regions 11 of adjacent negative electrode plates are fixedly connected, and the notched regions 12 of the positive electrode plates avoid the blank foil regions 11 of the negative electrode plates. Along the stacking direction of the positive electrode plates, the contact surfaces between the blank foil regions 11 of adjacent positive electrode plates are fixedly connected, and the notched regions 12 of the negative electrode plates avoid the blank foil regions 11 of the positive electrode plates, thereby forming a stacked-type cell 2.

### Step S203: Perform interconnection welding

In the interconnection welding of the stacked-type cell 2, the blank foil regions 11 of a plurality of layers of negative electrode plates are converged by welding or other joining means to form a negative pole tab group 21 of the stacked-type cell 2, and then the blank foil regions 11 of a plurality of layers of positive electrode plates are converged to form a positive tab group 22 of the stacked-type cell 2, and then the negative tab group 21 and the positive tab group 22 are connected to a tab connection strap 4 separately.

### Step S204: Apply a sealing adhesive.

A sealing adhesive 5 is pre-bonded to the surfaces of the negative tab group 21 and the positive tab group 22 at the same time, and specifically pre-bonded at a weld imprint position of the negative tab group 21 and the weld imprint position of the positive tab group 22, so as to improve the hermeticity of the joint between the weld imprint position of the negative tab group 21 and the packaging film 3 as well as the joint between the weld imprint position of the positive tab group 22 and the packaging film 3.

### Step S205: Fix the sealing adhesive and the stacked-type cell.

The negative tab group 21 and the positive tab group 22 are heated by a tab heating press head. The negative tab group 21 is connected and fixed to the sealing adhesive 5, and the positive tab group 22 is connected and fixed to the sealing adhesive 5.

### Step S206: Seal the stacked-type cell.

First, the pre-bonded stacked-type cell 2 is placed in a pocket 31 of a stamped packaging film 3, and then the two sides of the packaging film are sealed and folded by two side seal edges 33 respectively. The top of the packaging film is sealed and folded by a top seal edge 32. Finally, the packaging film 3 is heated by a battery sealing press head. The heated packaging film 3 is hermetically fixed to the stacked-type cell 2, the negative tab group 21, the positive tab group 22, and the sealing adhesive 5 separately, thereby sealing the stacked-type cell 2.

The implementation principles of this embodiment are as follows: A right triangle is chamfered away from the second end corner position at the head of the electrode plate body 1 to form a region used as the notched region 12. The chamfering makes the die-cutting of the electrode plate simpler, and makes the edge smooth. When the packaging film 3 is stamped to form a pocket during packaging, the edge angle of the pocket is large, and wrinkles are not prone to be formed at the edge of the pocket, and the packaging effect is good. A blank foil region 11 with the same shape and same size as the notched region 12 is provided at the first end corner position of the head of the electrode plate body 1. The blank foil region 11 replaces the conventional tab structure, eliminates the tabs that extend out from conventional electrode plates, and can reduce the gap between the packaging film 3 and the electrode plate during packaging. In the stacked-type cell 2 formed by stacking the electrode plate bodies 1, not only the sealing and edge-folding operations are enabled on both sides, the packaging and edge-folding operations are also enabled at the top because a right triangle is formed at the two end corner positions at the top. The conventional top seal is eliminated, and the length of the top seal is reduced, thereby reducing the overall length of the sealing structure of the stacked-type cell 2 in the length direction, effectively improving space efficiency and energy density, and in turn, improving the energy density benefits of the pouch-type cell.

The technical features in the foregoing embodiments may be combined arbitrarily. For brevity, not all possible combinations of the technical features in the embodiments are described. However, to the extent that no conflict exists, all such combinations of the technical features are considered falling within the scope hereof.

The foregoing embodiments merely describe several implementations of this application. The description is relatively detailed, but constitutes no limitation on the patent scope hereof. It is hereby noted that several variations and improvements, which may be made to the embodiments by a person of ordinary skill in the art without departing from the concept of this application, fall within the protection scope of this application. Therefore, the protection scope of this application is subject to the claims appended hereto.

## Claims

1. An electrode plate, **characterized in that** the electrode plate comprises:
an electrode plate body (1); wherein
the electrode plate body (1) comprises a coated region (13), and a blank foil region (11) located at one end corner of the electrode plate body (1), and the blank foil region (11) forms a tab of the electrode plate body (1);
a notch is provided at an other end corner of the electrode plate body (1);
the notch is formed by chamfering the other end corner of the electrode plate body (1);
the blank foil region (11) comprises an edge in a long-side direction of the electrode plate body (1) and an edge in a short-side direction of the electrode plate body at right angle to each other, a boundary line between the blank foil region (11) and the coated region (13) is a first boundary line (14), and an angle between the edge of the blank foil region (11) in the short-side direction of the electrode plate body (1) and the first boundary (14) line ranges from 30° to 60°; and
a notched region (12) is formed by an extension line of an edge of the electrode plate in the long-side direction of the electrode plate body (1), an extension line of an edge of the electrode plate in the short-side direction of the electrode plate, and an edge of the notch at the other end corner of the electrode plate body (1); a boundary line between the notched region (12) and the coated region (13) is a second boundary line (15), and an angle between the extension line of the edge of the electrode plate in the short-side direction of the electrode and the second boundary line (15) ranges from 30° to 60° .

2. The electrode plate according to claim 1, **characterized in that**
the angle between the edge of the blank foil region (11) in the short-side direction of the electrode plate body (1) and the first boundary line (14) ranges from 45° to 60°; and
the angle between the extension line of the edge of the electrode plate (1) in the short-side direction of the electrode plate body (1) and the second boundary line (15) ranges from 45° to 60°.

3. The electrode plate according to claim 2, **characterized in that**
the angle between the edge of the blank foil region (11) in the short-side direction of the electrode plate body (1) and the first boundary line (14) ranges from 45° to 50°; and
the angle between the extension line of the edge of the electrode plate in the short-side direction of the electrode plate body (1) and the second boundary line (15) ranges from 45° to 50°.

4. The electrode plate according to claim 1 or 2, **characterized in that**
the one end corner is a first end corner of the electrode plate body (1); and
the other end corner is a second end corner of the electrode plate body (1); the second end corner of the electrode plate body (1) is arranged symmetrically to the first end corner of the electrode plate body (1).

5. The electrode plate according to claim 4, **characterized in that** the electrode plate body (1) comprises a first lateral edge (16) and a second lateral edge (17) parallel to each other, a third lateral edge (18) perpendicular to the first lateral edge (16), and a fourth lateral edge (19) perpendicular to the second lateral edge (17); and
the notched region (12) is located at the second end corner formed by the first lateral edge (16) and the third lateral edge (18); and the blank foil region (11) is located at the first end corner formed by the second lateral edge (17) and the third lateral edge (18).

6. The electrode plate according to claim 5, **characterized in that**
both the blank foil region (11) and the notched region (12) are configured as right-angled triangles.

7. A stacked-type cell (2), comprises a plurality of positive electrode plates, a plurality of negative electrode plates, and a plurality of separators; the negative electrode plates and the positive electrode plates are alternately stacked in sequence, and the separators are sandwiched between adjacent negative electrode plates and positive electrode plates;
**characterized in that** each positive electrode plate and each negative electrode plate is the electrode plate according to any one of claims 1 to 6.

8. The stacked-type cell (2) according to claim 7, **characterized in that**
the blank foil regions (11) of the plurality of negative electrode plates are located on a first side of the stacked-type cell;
the blank foil regions (11) of the plurality of positive electrode plates are located on a second side of the stacked-type cell;
the first side and the second side are two opposite sides of the stacked-type cell in a width direction of the stacked-type cell (2);
the blank foil regions (11) of the plurality of negative electrode plates converge to form a negative tab group (21) of the stacked-type cell (2); and
the blank foil regions (11) of the plurality of positive electrode plates converge together to form a positive tab group (22) of the stacked-type cell (2).

9. The stacked-type cell (2) according to claim 8, **characterized in that**
a contact surface between the blank foil regions (11) of adjacent negative electrode plates is fixedly connected by ultrasonic welding;
a contact surface between the blank foil regions (11) of adjacent positive electrode plates is fixedly connected by ultrasonic welding.

10. The stacked-type cell (2) according to claim 9, **characterized in that**
the shapes of both the negative tab group (21) and the positive tab group (22) are right triangles.

11. A pouch battery, **characterized in that** the pouch battery comprises the stacked-type cell (2) according to any one of claims 8 to 10, a packaging film (3), and at least two tab connection straps (4);
the stacked-type cell (2) is enclosed in the packaging film (3);
one of the tab connection straps (4) is electrically connected to the negative tab group (23) of the stacked-type cell (2), one end of the one of the tab connection strap (4) is electrically connected to the negative tab group (21), and another end of the one of the tab connection strap (4) extends out of the packaging film (3) to form a power transmission channel;
an other one of the tab connection straps is electrically connected to the positive tab group (22) of the stacked-type cell (2), one end of the other one of the tab connection strap (4) is electrically connected to the positive tab group (22), and another end of the other one of the tab connection strap (4) extends out of the packaging film (3) to form the power transmission channel.

12. The pouch battery according to claim 11, **characterized in that**
the one of the tab connection strap (4) is electrically connected to the negative tab group (21) by laser welding or ultrasonic welding.

13. The pouch battery according to claim 11, **characterized in that**
the packaging film (3) comprises a recess, and a top seal edge (32) and two side seal edges (33) integrally formed with the recess;
the stacked-type cell (2) is enclosed in the recess;
the top seal edge (32) is connected to the stacked-type cell (2) and bent at a top of the stacked-type cell (2); and
the two side seal (33) edges are separately connected to the stacked-type cell (2) and bent on corresponding lateral surfaces.

14. The pouch battery according to claim 13, **characterized in that**
the plurality of tab connection straps (4) are configured as straight connection straps;
the straight connection straps extend out from an end corner of the packaging film (3) along a direction perpendicular to a bevel edge in the blank foil region (11).

15. The pouch battery according to claim 13, **characterized in that**
the tab connection straps (4) are configured as special-shaped connection strap;
the special-shaped connection strap comprises a first section and a second section, the first section extends out from the end corner of the packaging film (3) along the direction perpendicular to the bevel edge in the blank foil region (11); and the second section is integrally connected to a free end of the first section and extends along a long-side direction of the stacked-type cell (2).
